# EUROPÄISCHE PATENTSCHRIFT

(11) **EP 2 090 443 B1**
(45) Veröffentlichungstag und Bekanntmachung des Hinweises auf die Patenterteilung: **13.04.2011**
(21) Anmeldenummer: 09150982.8
(22) Anmeldetag: 21.01.2009
(51) Int. Cl.: B60C 11/03

(54) **Fahrzeugluftreifen**
Pneumatic tire
Pneumatique

(30) Priorität: 15.02.2008 DE 102008009324
(43) Veröffentlichungstag der Anmeldung: 19.08.2009
(73) Patentinhaber: Continental Reifen Deutschland GmbH, 30165 Hannover (DE)
(72) Erfinder: Welge, Konrad, 31535 Neustadt (DE); Rittweger, Stefan, 30163 Hannover (DE)
(74) Vertreter: Finger, Karsten

(56) Entgegenhaltungen:
- EP-A- 0 718 123
- EP-A- 1 106 393
- JP-A- 2006 290 234
- US-A1- 2007 215 258

## Beschreibung

Die Erfindung betrifft einen Fahrzeugluftreifen mit einem Laufstreifen, welcher laufrichtungsgebunden ausgeführt ist und Profilelemente, wie Profilblöcke und Profilrippen, aufweist, die durch Umfangsnuten voneinander getrennt sind, wobei die Blöcke mit einer zusätzlichen im Wesentlichen in Umfangsrichtung verlaufenden Rille versehen sind, deren Tiefe maximal 2,5 mm beträgt, deren Breite über ihre Erstreckung gegen die Abrollrichtung des Reifens größer wird und welche zumindest mit ihrem breiter werdenden Endabschnitt in eine Quernut mündet.

Es ist eine Vielzahl von laufrichtungsgebunden ausgeführten Ausführungsvarianten von Laufstreifen für Fahrzeugluftreifen bekannt. Für den Wintereinsatz vorgesehene Fahrzeugluftreifen besitzen darüber hinaus Profilelemente, insbesondere Profilblöcke, die mit einer Vielzahl von Einschnitten, die beispielsweise wellen- oder zick-zack-förmig verlaufen, versehen sind. Diese Einschnitte sind für die Griffeigenschaften des Reifens auf winterlichen Fahrbahnen, insbesondere auf Schnee und Eis, von Bedeutung. Abgesehen von Einschnitten werden an Profilblöcken herkömmlicher Laufstreifen meist keine weiteren strukturellen Elemente vorgesehen. Die somit weitgehend geschlossenen Blockoberflächen sind mit dem Nachteil behaftet, dass sie Wasser auf nassen Fahrbahnen nur schlecht verdrängen können. Eine gute Wasserverdrängung ist jedoch erforderlich, um den Kontakt der Blockoberflächen mit der Fahrbahn zu ermöglichen. Insbesondere bei größeren Blockoberflächen ist die Flächenpressung nicht hoch genug, um den Wasserfilm zwischen Straße und Blockoberfläche zu beseitigen. Das Fahrzeug läuft somit Gefahr, auf dem Wasserfilm zu rutschen, Aquaplaning tritt auf.

Ein Fahrzeugluftreifen der eingangs genannten Art ist beispielsweise aus der EP-A-1 106 393 bekannt. Der laufrichtungsgebunden ausgeführte Laufstreifen dieses Fahrzeugluftreifens ist insbesondere für den Einsatz unter winterlichen Fahrbedingungen vorgesehen und weist zwei Schulterblockreihen und zwei im mittleren Laufstreifenbereich verlaufende Blockreihen auf, deren Blöcke jeweils eine schmale in Umfangsrichtung umlaufende Rille aufweisen, welche zumindest über einen Großteil ihrer Erstreckung eine Tiefe von 2 mm bis 3 mm besitzt. Auch aus der US-A-2007/215258 ist ein Fahrzeugluftreifen mit einem laufrichtungsgebunden gestalteten Laufstreifen bekannt, welcher mit Profilblöcken versehen ist, die mit in Umfangsrichtung verlaufende seichten Rillen versehen sind.

Aus der US-A-5,078,190 ist ein Fahrzeugluftreifen bekannt, welcher einen nicht laufrichtungsgebunden ausgeführten Laufstreifen aufweist, welcher sich aus einer Anzahl von in Umfangsrichtung umlaufenden Blockreihen zusammensetzt, die voneinander durch im Wesentlichen in Umfangsrichtung verlaufende breite Umfangsnuten getrennt sind. Die Schulterblöcke in den Schulterblockreihen sind durch schmale, in Umfangsrichtung umlaufende Rillen zusätzlich strukturiert, welche variierende Tiefe besitzen. An ihren Abschnitten, die in Quernuten münden, weisen diese Rillen die Tiefe der Quernuten auf, in ihrem mittleren Abschnitt sind sie weniger tief ausgeführt.

Der Erfindung liegt die Aufgabe zugrunde, einen Laufstreifen für Fahrzeugluftreifen derart zu gestalten, dass auf nassem Untergrund die Blockoberflächen ihren Kontakt zum Untergrund behalten, indem das Wasserableitvermögen des Laufstreifens verbessert wird.

Gelöst wird die gestellte Aufgabe erfindungsgemäß dadurch, dass die Rille zumindest mit ihrem breiter werdenden Endabschnitt in eine Quernut mündet, welche einen verbreiterten Quernutabschnitt aufweist, der durch eine an dem der Mündungsstelle gegenüberliegenden Block vorgesehene Einbuchtung gebildet ist und gegenüber der Mündungsstelle der Rille beginnend nach außen verläuft.

Die flachen Rillen bewirken gemeinsam mit den breiten Quernutabschnitten ein schnelles und wirkungsvolles Ableiten von Wasser nach außen. Dadurch wird ein etwaiger Wasserfilm zwischen den Blockoberflächen und dem Untergrund schnell aufgebrochen und ein Kontakt zwischen den Blockoberflächen und dem Untergrund wesentlich schneller hergestellt.

Gemäß einer bevorzugten Ausführungsform der Erfindung weisen die Rillen eine Breite auf, die an der schmalsten Stelle zwischen 1,5 mm und 3 mm und an der breitesten Stelle zwischen 3 mm und 6 mm beträgt. Die Tiefe der Rillen beträgt mindestens 1 mm. Dadurch ist sichergestellt, dass die Rillen die Wasserableitung wirkungsvoll unterstützen, aber die Blockverformung bzw. die Steifigkeit des Blockes nicht beeinflussen.

Der durch die Einbuchtung gebildete breite Quernutabschnitt kann insbesondere bis zu doppelt so breit ausgeführt sein wie der zweite Quernutabschnitt. Auch bei der Auslegung der Breite dieses Quernutabschnittes wird auf eine Optimierung der Wasserableitung geachtet, ohne die sonstigen Laufstreifeneigenschaften zu beeinträchtigen.

Die Wasserableitung durch die zusätzliche flache Rille und den verbreiterten Quernutabschnitt soll möglichst ohne Verwirbelungen möglich sein. In diesem Zusammenhang ist es von Vorteil, wenn der gegenüber der Einbuchtung in die Quernut mündende Endabschnitt der Rille in Richtung des Verlaufes des verbreiterten Abschnittes der Quernut gekrümmt ist und wenn das der Mündungsstelle der Rille gegenüberliegenden Ende der Einbuchtung gerundet ausgeführt ist.

Je nach Auslegung des Profils bzw. der Umfangserstreckung der Profilblöcke kann es von Vorteil sein, wenn die Rillen beidseitig in Quernuten münden oder wenn alternativ dazu die Rillen innerhalb des Blockes und somit sacknutartig enden.

Zur weiteren Verbesserung des Wasserableitvermögens können darüber hinaus die Rillen gegenüber der Umfangsrichtung des Reifens unter einem Winkel von bis zu 45° geneigt verlaufen und es können die verbreiterten Quernutabschnitte eine in Richtung in nach außen, zum näher liegenden Laufstreifenrand zu, größer werdende Breite aufweisen.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine Draufsicht auf einen Abschnitt eines Laufstreifens für einen Fahrzeugluftreifen mit einer Ausführungsvariante der Erfindung,
Fig. 2 eine Draufsicht auf zwei Profilblöcke eines Laufstreifens mit einer weiteren Ausführungsvariante der Erfindung und
Fig. 3 eine weitere Ausführungsform der Erfindung anhand von Draufsichten auf drei Profilblöcke einer Blockreihe.

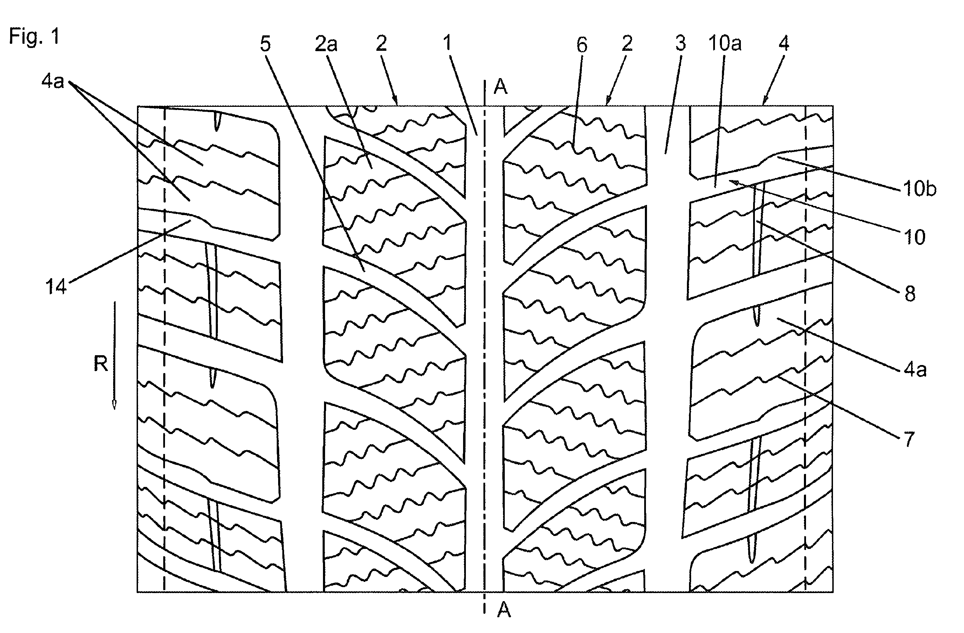

Fig. 1 zeigt einen Abschnitt eines Laufstreifens, welcher insbesondere für Winterreifen von Personkraftwagen vorgesehen ist. Ein erfindungsgemäß ausgeführter Laufstreifen ist laufrichtungsgebunden ausgeführt, sodass ein mit einem solchen Laufstreifen versehener Reifen derart am Fahrzeug zu montieren ist, dass die vorgesehene Abrollrichtung, die in den Zeichnungsfiguren mit dem Pfeil R gekennzeichnet ist, eingehalten ist. Der in Fig. 1 beispielhaft dargestellte Laufstreifen weist eine entlang des Reifenäquators A-A in Umfangsrichtung umlaufende breite Umfangsnut 1 auf. Beidseitig der Umfangsnut 1 verläuft jeweils eine Blockreihe 2, die durch eine weitere, in Umfangsrichtung umlaufende, ebenfalls breite Umfangsnut 3 von einer Schulterblockreihe 4 getrennt ist. Die Blöcke 2a in den Blockreihen 2 und die Blöcke 4a in den Schulterblockreihen 4 sind voneinander durch Quernuten 5, 10 getrennt, welche, über die gesamte Breite des Laufstreifens betrachtet, von den Laufstreifenrändem in Richtung Reifenäquator A-A etwa V-förmig beziehungsweise gepfeilt verlaufen, sodass sich die Laufrichtungsgebundenheit des Laufstreifens ergibt. Die Quernuten 5 schließen mit der Umfangsrichtung einen Winkel in der Größenordnung von etwa 30 bis 45 ° ein, die Quernuten 10 verlaufen im Wesentlichen in Laufstreifenquerrichtung.

Die Blöcke 2a in den beiden mittleren Blockreihen 2 sind jeweils mit einer Anzahl von in Draufsicht wellen- oder zick-zack-förmig verlaufenden Einschnitten 6 versehen. Die Einschnitte 6 erstrecken sich etwa in Laufstreifenquerrichtung und parallel zueinander. Die Schulterblöcke 4a der Schulterblockreihen 4 sind jeweils mit zwei zick-zack-förmig verlaufenden Einschnitten 7 versehen, deren Erstreckungsrichtung zumindest im Wesentlichen mit der Erstreckungsrichtung der Quernuten 10 übereinstimmt.

Bei der in Fig. 1 gezeigten Ausführungsvariante ist jeder zweite Schulterblock 4a in seinem mittleren Bereich mit einer flachen Rille 8 versehen, welche sich im Wesentlichen in Umfangsrichtung und von Blockkante zu Blockkante erstreckt. Die Rille 8 weist eine Tiefe von 1 mm bis 2,5 mm auf, welche über die Erstreckung der Rille 8 vorzugsweise konstant ist, und wird über ihre Erstreckung gegen die Abrollrichtung R kontinuierlich breiter. An ihrer schmalsten Stelle an dem einen Mündungsbereich in eine Quernut 10 weist die Rille 8 eine Breite von 1,5 mm bis 3 mm auf, an ihrer breitesten Stelle an ihrem zweiten Mündungsbereich in eine andere Quernut 10 weist sie eine Breite von 3 mm bis 6 mm auf. Über die Erstreckung der Rille 8 von der schmalsten Stelle bis zur breitesten Stelle kann die Tiefe der Rille 8 variiert werden, indem sie in Richtung breitester Stelle kontinuierlich tiefer wird, wobei beispielsweise ihre Tiefe von 1 mm auf 2,5 mm zunimmt. Der breitere Endabschnitt der Rille 8 verläuft leicht bogenförmig gekrümmt in Richtung des Laufstreifenrandes. Die Quernut 10, in welche der breitere Endabschnitt der Rille 8 einmündet, weist zwei Abschnitte 10a, 10b auf. Der Abschnitt 10b, welcher beim Mündungsbereich der Rille 8 beginnt und über den Laufstreifenrand hinaus verläuft, ist zwischen 20% und 100% breiter als der in die Umfangsnut 3 mündende Abschnitt 10a der Quernut 10. Die Verbreiterung des Abschnittes 10b der Quernut 10 entsteht durch eine Einbuchtung 14 am Schulterblock 4a, welcher ohne Rille 8 ausgeführt ist. Die Einbuchtung 14 beginnt gegenüber dem Mündungsbereich der Rille 8 im benachbarten Schulterblock. Hier ist die Einbuchtung 14 gerundet, derart, dass die Rundung eine Fortsetzung der laufstreifeninnenseitigen Rillenflanke der Rille 8 ist. Bei der in Fig. 1 gezeigten Ausführungsvariante ist die Breite des Abschnittes 10b, abgesehen vom Bereich der Rundung, über seine Erstreckung bis zum Ende der Blöcke 4a jenseits des Laufstreifenrandes konstant.

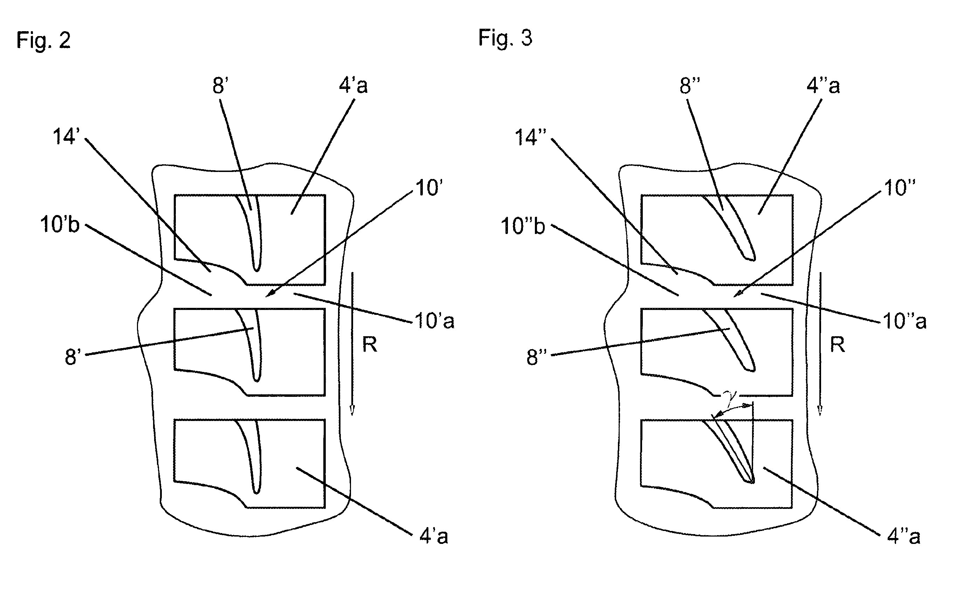

Fig. 2 zeigt eine weitere Ausführungsform der Erfindung anhand von drei in Umfangsrichtung benachbarten Profilblöcken 4'a, die in dieser Figur der Einfachheit halber in Draufsicht rechteckig dargestellt sind. Die Profilblöcke 4'a gehören zu einer in Umfangsrichtung umlaufenden Blockreihe, die eine Schulterblockreihe oder auch eine im mittleren Bereich des Laufstreifens befindliche Blockreihe sein kann. Der Pfeil R zeigt in die vorgesehene Abrollrichtung des Reifens. Jeder Profilblock 4'a ist mit einer flachen Rille 8', die jeweils im mittleren Bereich des Blockes 4'a sowie im Wesentlichen in Umfangsrichtung verläuft, versehen, wobei die Rillen 8' nur in eine Quernut 10' münden und somit innerhalb der Blöcke 4'a enden. Die Rillen 8' erstrecken sich über 70% bis 90% der Umfangserstreckung der Blöcke 4'a. Die Breite der Rillen 8' vergrößert sich von ihren geschlossenen Enden bis zu ihren Mündungsstellen, wie bereits oben beschrieben, von einer Breite in der Größenordnung von 1,5 mm bis 3 mm bis auf eine Breite von 3 mm bis 6 mm an den Mündungsstellen in die Quernuten 10'. Bezüglich der Rillentiefe wird auf die Ausführungen zu Fig. 1 verwiesen. Jede Rille 8' weist ferner einen leicht bogenförmigen Verlauf auf, wobei, analog zur Ausführungsform gemäß Fig. 1, gegenüber ihrer Mündungsstelle im benachbarten Block 4a eine Einbuchtung 14' beginnt, durch welche ein breiterer Abschnitt 10'b in der zwischen den Blöcken 4'a verlaufenden Quernut 10' gebildet ist. Die Einbuchtung 14'im Block 4'a ist derart ausgeführt, dass der Abschnitt 10'b der Quernut 10' in Richtung nach außen größer wird. Das Ende des Quemutabschnittes 10'b kann bis zu doppelt so breit sein wie der zweite Quernutabschnitt 10'a.

Fig. 3 zeigt eine weitere Ausführungsvariante der Erfindung anhand von drei in Umfangsrichtung aufeinanderfolgenden Blöcken 4"a aus einer in Umfangsrichtung umlaufenden Blockreihe, welche eine Schulterblockreihe oder eine im mittleren Bereich des Laufstreifens verlaufende Blockreihe sein kann. Jeder der gezeigten Blöcke 4"a ist mit einer flachen, analog zur Ausführungsform gemäß Fig. 2 innerhalb des jeweiligen Blockes 4"a endenden Rille 8" versehen. Bezüglich Breite und Tiefe sind die Rillen 8", wie oben beschrieben, ausgeführt. Die Rillen 8" verlaufen unter einem Winkel γ von bis zu 45 ° zur Umfangsrichtung, die der jeweiligen Mündungsstelle am gegenüberliegenden Block 4"a ausgebildete Einbuchtung 14" verbreitert die Quernut 10" in Fortsetzung des Verlaufes der Rille 8". Auch bei dieser Ausführungsform weisen die durch die Einbuchtungen 14" in den Blöcken 4"a gebildeten breiteren Abschnitte 10"b der Quernuten 10" eine nach außen, in Richtung benachbarten Laufstreifenrand größer werdende Breite, wie beschrieben, auf.

Die flachen Rillen 8, 8', 8" bewirken gemeinsam mit den breiteren Abschnitten 10b, 10'b, 10"b der Quernuten 10, 10', 10" eine deutliche Verbesserung der Wasserableitung nach außen. Auf nassen Fahrbahnen, insbesondere bei starkem Regen, wird daher der Wasserfilm zwischen den Profilblöcken und dem Untergrund beziehungsweise der Straße schneller aufgebrochen und ein guter Fahrbahnkontakt der Blöcke zum Untergrund gewährleistet.

Die Erfindung ist auf die dargestellten und beschriebenen Ausführungsformen nicht eingeschränkt. Erfindungsgemäß ausgeführte Laufstreifen können auch Kombination Profilrippen mit Blockreihen aufweisen.

### Bezugszeichenliste

- 1.........: Umfangsnut
- 2.........: Blockreihe
- 2a.......: Block
- 3.........: Umfangsnut
- 4.........: Schulterblockreihe
- 4a.......: Schulterblock
- 4'a.....: Block
- 4"a....: Blöcke
- 5.........: Quernut Schulter (?)
- 6.........: Einschnitt
- 7.........: Einschnitt
- 8.........: Rille
- 8'........: Rille
- 8".......: Rille
- 10.......: Quernut
- 10'......: Quernut
- 10".....: Quernut
- 10a.....: Abschnitt
- 10'a....: Abschnitt
- 10"a...: Abschnitt
- 10b.....: Abschnitt
- 10'b....: Abschnitt
- 10"b...: Abschnitt
- 14.......: Einbuchtung
- 14'......: Einbuchtung
- 14".....: Einbuchtung

## Patentansprüche

1. Fahrzeugluftreifen mit einem Laufstreifen, welcher laufrichtungsgebunden ausgeführt ist und Profilelemente, wie Profilblöcke (2b, 4a, 4'a, 4"a) und Profilrippen, aufweist, die durch Umfangsnuten (1, 3) voneinander getrennt sind, wobei die Blöcke (4a, 4'a, 4"a) mit einer zusätzlichen im Wesentlichen in Umfangsrichtung verlaufenden Rille (8, 8', 8") versehen sind, deren Tiefe maximal 2,5 mm beträgt, deren Breite über ihre Erstreckung gegen die Abrollrichtung des Reifens größer wird und welche zumindest mit ihrem breiter werdenden Endabschnitt in eine Quernut (10, 10', 10") mündet,
**dadurch gekennzeichnet,**
**dass** die Rille (8, 8', 8") einen verbreiterten Quernutabschnitt (10b, 10'b, 10"b) aufweist, der durch eine an dem gegenüber liegenden Block vorgesehene Einbuchtung (14, 14', 14") gebildet ist und gegenüber der Mündungsstelle der Rille (8, 8', 8") beginnend nach außen verläuft.

2. Fahrzeugluftreifen nach Anspruch 1, **dadurch gekennzeichnet, dass** die Rillen (8, 8', 8") eine Breite aufweisen, die an der schmalsten Stelle zwischen 1,5 mm 3 mm und an der breitesten Stelle zwischen 3 mm und 6 mm beträgt.

3. Fahrzeugluftreifen nach Anspruch 1 oder 2, **dadurch gekennzeichnet, dass** die Tiefe der Rillen (8, 8', 8") mindestens 1 mm beträgt.

4. Fahrzeugluftreifen nach einem der Ansprüche 1 bis 3, **dadurch gekennzeichnet, dass** der durch die Einbuchtung (14, 14', 14") gebildete Quernutabschnitt (10b 10'b, 10"b) bis zu doppelt so breit ist wie der zweite Quernutabschnitt (10a, 10'a, 10"a).

5. Fahrzeugluftreifen nach einem der Ansprüche 1 bis 4, **dadurch gekennzeichnet, dass** der gegenüber der Einbuchtung (14, 14', 14") in die Quernut (10, 10', 10") mündende Endabschnitt der Rille (8, 8', 8") in Richtung des Verlaufes des verbreiterten Abschnittes (10b, 10'b, 10"b) der Quernut (10, 10' 10") gekrümmt ist.

6. Fahrzeugluftreifen nach einem der Ansprüche 1 bis 5, **dadurch gekennzeichnet, dass** das der Mündungsstelle der Rille (8, 8', 8") gegenüberliegende Ende der Einbuchtung (14, 14', 14") gerundet ausgeführt ist.

7. Fahrzeugluftreifen nach einem der Ansprüche 1 bis 6, **dadurch gekennzeichnet, dass** die Rillen (8) beidseitig in Quernuten (10, 10', 10") münden.

8. Fahrzeugluftreifen nach einem der Ansprüche 1 bis 6, **dadurch gekennzeichnet, dass** die Rillen (8', 8") innerhalb der Blöcke (4'a, 4"a) enden.

9. Fahrzeugluftreifen nach einem der Ansprüche 1 bis 8, **dadurch gekennzeichnet, dass** die Rillen (8") gegenüber der Umfangsrichtung des Reifens bis zu einem Winkel (γ) von 45 ° geneigt verlaufen.

10. Fahrzeugluftreifen nach einem der Ansprüche 1 bis 9, **dadurch gekennzeichnet, dass** die verbreiterten Quernutabschnitte (10b, 10'b, 10"b) eine in Richtung nach außen, zum näher liegenden Laufstreifenrand zu, größer werdende Breite aufweisen.

## Claims

1. Vehicle pneumatic tyre having a tread which is embodied in a running-direction-dependent fashion and has profile elements, such as profile blocks (2b, 4a, 4'a, 4"a) and profile ribs which are separated from one another by circumferential grooves (1, 3), wherein the blocks (4a, 4'a, 4"a) are provided with a channel (8, 8', 8") which also runs essentially in the circumferential direction and whose depth is at maximum 2.5 mm, and whose width becomes larger over its extent counter to the rolling direction of the tyre and which opens, at least with its end section which becomes wider, into a transverse groove (10, 10', 10"),
**characterized**
**in that** the channel (8, 8', 8") has a widened transverse groove section (10b, 10'b, 10"b) which is formed by an indent (14, 14', 14") which is provided on the block lying opposite and runs outwards starting opposite the mouth point of the channel (8, 8', 8").

2. Vehicle pneumatic tyre according to Claim 1, **characterized in that** the channels (8, 8', 8") have a width which is between 1.5 mm and 3 mm at the narrowest point and between 3 mm and 6 mm at the widest point.

3. Vehicle pneumatic tyre according to Claim 1 or 2, **characterized in that** the depth of the channels (8, 8', 8") is at least 1 mm.

4. Vehicle pneumatic tyre according to one of Claims 1 to 3, **characterized in that** the transverse groove section (10b, 10'b, 10"b) which is formed by the indent (14, 14', 14") is twice as wide as the second transverse groove section (10a, 10'a, 10"a).

5. Vehicle pneumatic tyre according to one of Claims 1 to 4, **characterized in that that** end section of the channel (8, 8', 8") which opens into the transverse groove (10, 10', 10") opposite the indent (14, 14', 14") is curved in the direction of the course of the widened section (10b, 10'b, 10"b) of the transverse groove (10, 10', 10").

6. Vehicle pneumatic tyre according to one of Claims 1 to 5, **characterized in that** the end of the indent (14, 14', 14") which lies opposite the mouth point of the channel (8, 8', 8") is of rounded design.

7. Vehicle pneumatic tyre according to one of Claims 1 to 6, **characterized in that** the channels (8) open on both sides into transverse grooves (10, 10', 10").

8. Vehicle pneumatic tyre according to one of Claims 1 to 6, **characterized in that** the channels (8', 8") end inside the blocks (4'a, 4"a).

9. Vehicle pneumatic tyre according to one of Claims 1 to 8, **characterized in that** the channels (8") run at an incline of up to an angle (y) of 45° with respect to the circumferential direction of the tyre.

10. Vehicle pneumatic tyre according to one of Claims 1 to 9, **characterized in that** the widened transverse groove sections (10b, 10'b, 10''b) have a width which becomes larger in the outward direction towards the closer edge of the tread.

## Revendications

1. Bandage pneumatique pour roue de véhicule, présentant une bande de roulement configurée asymétriquement dans les deux sens de rotation et dotée d'éléments profilés, par exemple des blocs profilés (2b, 4a, 4'a, 4"a), et des nervures profilées séparées mutuellement par des rainures périphériques (1, 3), les blocs (4a, 4'a, 4"a) étant dotés d'une rainure supplémentaire (8, 8', 8") qui s'étend essentiellement dans la direction périphérique et dont la profondeur est d'au plus 2,5 mm, dont l'extension présente une plus grande largeur dans la direction opposée au sens de rotation du bandage de roue et qui débouche au moins par sa partie d'extrémité plus large dans une rainure transversale (10, 10', 10"),
**caractérisé en ce que**
la rainure (8, 8', 8") présente une partie élargie (10b, 10'b, 10"b) de rainure transversale qui est formée en entamant (14, 14', 14") le bloc opposé en commençant par l'extérieur, face à l'emplacement où la rainure (8, 8', 8") débouche.

2. Bandage pneumatique pour roue de véhicule selon la revendication 1, **caractérisé en ce que** les rainures (8, 8', 8") ont une largeur comprise entre 1,5 et 3 mm à l'emplacement le plus étroit et entre 3 mm et 6 mm à l'emplacement le plus large.

3. Bandage pneumatique pour roue de véhicule selon les revendications 1 ou 2, **caractérisé en ce que** la profondeur des rainures (8, 8', 8") est d'au moins 1 mm.

4. Bandage pneumatique pour roue de véhicule selon les revendications 1 à 3, **caractérisé en ce que** la partie (10b, 10'b, 10"b) de la rainure transversale formée par l'entame (14, 14', 14") a une largeur qui peut atteindre le double de celle de la deuxième partie (10a, 10'a, 10''a) de la rainure transversale.

5. Bandage pneumatique pour roue de véhicule selon les revendications 1 à 4, **caractérisé en ce que** la partie d'extrémité de la rainure (8, 8', 8") qui débouche face à l'entame (14, 14', 14") dans la rainure transversale (10, 10', 10") est courbée en direction de l'extension de la partie élargie (10b, 10'b, 10''b) de la rainure transversale (10, 10', 10").

6. Bandage pneumatique pour roue de véhicule selon les revendications 1 à 5, **caractérisé en ce que** l'extrémité de l'entame (14, 14', 14") opposée à l'emplacement où la rainure (8, 8', 8") débouche est arrondie.

7. Bandage pneumatique pour roue de véhicule selon les revendications 1 à 6, **caractérisé en ce que** les rainures (8) débouchent des deux côtés dans les rainures transversales (10, 10', 10").

8. Bandage pneumatique pour roue de véhicule selon les revendications 1 à 6, **caractérisé en ce que** les rainures (8', 8") se terminent à l'intérieur des blocs (4'a, 4"a).

9. Bandage pneumatique pour roue de véhicule selon les revendications 1 à 8, **caractérisé en ce que** les rainures (8") forment par rapport à la direction périphérique du bandage de roue un angle (γ) qui peut atteindre 45°.

10. Bandage pneumatique pour roue de véhicule selon les revendications 1 à 9, **caractérisé en ce que** la largeur des parties élargies (10b, 10'b, 10"b) de la rainure transversale croît dans la direction allant vers l'extérieur et vers le bord le plus proche de la bande de roulement.
